Europäisches Patentamt

European Patent Office

Office européen des brevets

(19)

(11) Veröffentlichungsnummer: **0 012 856**
**B1**

(12) **EUROPÄISCHE PATENTSCHRIFT**

(45) Veröffentlichungstag der Patentschrift: **21.12.83**

(51) Int. Cl.³: **C 09 K 5/04, F 25 B 15/04**

(21) Anmeldenummer: **79104677.4**

(22) Anmeldetag: **26.11.79**

(54) Verwendung einer wässrigen Lithiumbromidlösung als Absorberkomponente für ein Arbeitsstoffpaar.

(30) Priorität: **21.12.78 DE 2855434**

(43) Veröffentlichungstag der Anmeldung:
**09.07.80 Patentblatt 80/14**

(45) Bekanntmachung des Hinweises auf die Patenterteilung:
**21.12.83 Patentblatt 83/51**

(84) Benannte Vertragsstaaten:
**AT BE CH DE FR GB IT NL SE**

(56) Entgegenhaltungen:
**DE - A - 2 631 245**
**GB - A - 27 985**
**US - A - 1 848 918**

(73) Patentinhaber: **Alefeld, Georg, Prof. Dr.**
**Josef-Raps-Strasse 3**
**D-8000 München 40 (DE)**

(73) Patentinhaber: **Radermacher, Reinhard**
**Hess-Strasse 36**
**D-8000 München 40 (DE)**

(72) Erfinder: **Alefeld, Georg, Prof. Dr.**
**Josef-Raps-Strasse 3**
**D-8000 München 40 (DE)**
Erfinder: **Radermacher, Reinhard**
**Hess-Strasse 36**
**D-8000 München 40 (DE)**

(74) Vertreter: **Kraus, Walter, Dr. et al,**
**Patentanwälte Dres. Kraus & Weisert**
**Irmgardstrasse 15**
**D-8000 München 71 (DE)**

Courier Press, Leamington Spa, England.

### Verwendung einer wässrigen Lithium bromidlösung als Absorber komponente für ein Arbeitsstoffpaar

Die Erfindung betrifft die Verwendung einer wäßrigen Lithiumbromidlösung als Absorberkomponente für ein Arbeitsstoffpaar.

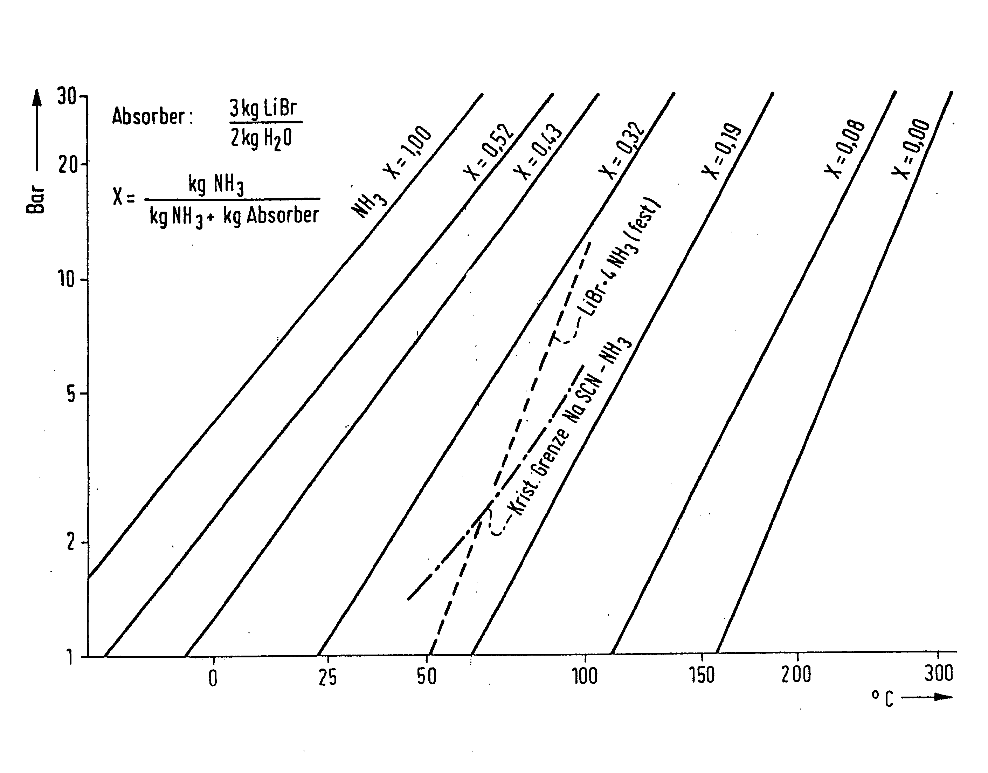

Es ist bekannt, daß die Leistungsziffer einer Absorptionskältemaschine mit $NH_3$ als Kältemittel bei Ersatz von $H_2O$ als Absorbermittel durch eine Lösung von NaSCN in Ammoniak verbessert werden kann (R. K. Swartman, V. Ha und C. Swaminathan, Solar Energy *17*, 123—127 (1975)). Die Anwendung dieses Stoffpaars als Betriebsmittel für Absorptionswärmepumpen z.B. für Hausheizung scheitert jedoch daran, daß das Lösungsfeld, innerhalb dessen die Salzlösung flüssig bleibt, zu eng ist (die strichpunktierte Linie in der Figur gibt die Löslichkeitsgrenze für NaSCN in $NH_3$ an). Es ist praktisch nicht möglich, die für Hausheizung erforderlichen Verflüssiger- und Absorbertemperaturen von ca. 50°C zu erhalten, ohne in den für den Betrieb gefährlichen Bereich der Löslichkeitsgrenze zu kommen.

Analoges wird von Absorptionskälteanlagen berichtet, die mit den Stoffpaaren $NH_3$ und $LiNO_3$ arbeiteten. Obwohl dieses Stoffpaar günstige thermodynamische Eigenschaften, wie z.B. kleine spezifische Wärmekapazität der Lösung, verschwindender Dampdruck von $LiNO_3$, hat, konnten sich diese Maschinen wegen der Gefahr des Auskristallisierens einer festen Phase aus der ammoniakarmen Lösung nicht durchsetzen. Ein Ausweichen auf andere Salze, wie z.B. auf das für das Kältemittel $H_2O$ bewährte LiBr, scheitert daran, daß die meisten Salze bei Zimmertemperatur schon feste Ammoniakate (z.B. gestrichelte Linie der Figur für $LiBr \cdot 4NH_3$) bilden bzw. daß das Lösungsfeld für den flüssigen Bereich der Lösungen noch kleiner ist als für z.B. NaSCN.
Aus der GB

Aus der GB—A—27985/1913 ist ein Arbeitsstoffsystem für die Erzeugung von Kälte, enthaltend Ammoniak als Kältemittel und eine sehr stark oder übersättigte wäßrige Salzlösung bekannt. Weiterhin wird in der DE—A—2 631 245 beschrieben, als Absorber für Ammoniak eine stark gesättigte oder übersättigte Salzlösung zu benutzen.

Aufgabe der Erfindung ist es, eine Absorberkomponente für ein Arbeitsstoffpaar aus einer Absorberkomponente und Ammoniak als Arbeitsmittelkomponente für Absorptionswärme- und Absorptionskältemaschinen zur Verfügung zu stellen, bei dem keine Auskristallisation von Ammoniakaten erfolgt und in der Absorptionsmaschine der Rektifikator in Wegfall kommen kann.

Diese Aufgabe wird erfindungsgemäß durch die Verwendung einer wäßrigen Lithiumbromid-Lösung als Absorberkomponente für ein Arbeitsstoffpaar aus einer Absorberkomponente und Ammoniak als Arbeitsmittelkomponente für Absorptionswärme- und Absorptionskältemaschinen, wobei die Konzentration des Lithiumbromids in Wasser bei −10°C 57 Gew.-%

$$\left( \frac{Salz}{Salz + H_2O} \right) \pm 10\%$$

ist, gelöst.

Die spezielle Lösung gemäß der vorliegenden Erfindung wird in den oben genannten Druckschriften nicht nahegelegt, da diese Druckschriften eine ganze Reihe bekannter Möglichkeiten beschreiben. An keiner Stelle dieser Druckschriften finden sich aber Hinweise auf die Verwendung einer wäßrigen Lithiumbromidlösung mit der angegebenen Konzentration des Lithiumbromids in Wasser als Absorberkomponente für ein solches Arbeitsstoffpaar.

Im Gegensatz zu den Vorschlägen von Unger (Beilage z. Kältetechnik *12*, 119 (1957)) wird erfindungsgemäß eine wäßrige Lithiumbromidlösung spezieller Konzentration als Absorber verwendet. Die Nutzung der Absorberwirkung des Salzes für Ammoniak steht im Vordergrund, wobei das Wasser wesentlich dazu dient, die vorteilhaften Eigenscahften des Absorbers zu erhalten. Die Erfindung von Platen (US—A—1 848 918) hatte zum Ziel, durch Salze die Neigung der Dampfdruckkurven von $NH_3/H_2O$ zu ändern, um Schnittpunkte zwischen verschiedenen Dampfdruckkurven zu erhalten, während Albright (ASHRAE Transactions *72*, 198 (1966) Lösungen von Salzen in organischen Lösungsmitteln als Absorber untersuchte.

Die Ammoniakate $LiBr \cdot nNH_3$ (n=4, 3, 2, 1) sind wasserlöslich. Durch Zugabe einer gewissen Menge Wasser kann daher die Auskristallisation von Ammoniakaten rückgängig gemacht bzw. verhindert werden. Um selbst bei extremer Ammoniakausgasung weder Ausscheidungen von LiBr-Ammoniakaten noch von LiBr-Hydraten zu bekommen und um möglichst wenig Wasser hinzufügen zu müssen, wird die zugegebene Menge Wasser so gewählt, daß für die ammoniakfreie LiBr-Wasserlösung die Sättigungsgrenze gerade nicht überschritten wird, also sich keine Ausscheidungen zeigen. Die Konzentration dieser fast gesättigten wäßrigen Lösung ist bestimmt durch die triefste Temperatur der Absorberlösung. Sie hängt also davon ab, ob Absorberbetrieb ($\approx$20°C) oder Resorberbetrieb (0°C bis −10°C) angestrebt wird.

Ein weiterer Vorteil ergibt sich daraus, daß in der Absorptionsmaschine der Rektifikator in Wegfall kommen kann.

Die Erfindung wird anhand der beigefügten Figur näher erläutert. Diese zeigt das Lösungsfeld für $NH_3$ in Verbindung mit einem Absorptionsstoff aus drei Gew. Teilen LiBr mit zwei Gew.Teilen $H_2O$. Nicht nur, daß die festen Phasen des $LiBr \cdot nNH_3$ verschwunden sind, auch zeigt das Lösungsfeld zusätzlich eine erhebliche Verbreiterung zu höheren Temperaturen, durch deren Anwendung sich eine gute Leistungsziffer ergibt, ohne daß der Betrieb durch Auskristallisation gefährdet ist.

Aufgrund der Auskristallisation von Ammoniakaten wird die gegebene Begrenzung der Anwendung von Salzen mit deren sonst vorteilhaften Eigenschaften als Absorberstoffe für $NH_3$ durch die Verwendung fast gesättigter wäßriger Lösungen als Absorber aufgehoben, ohne daß man die Nachteile des $H_2O$ in Kauf nehmen muß.

**Patentanspruch**

1. Verwendung einer wäßrigen Lithiumbromid-Lösung als Absorberkomponente für ein Arbeitsstoffpaar aus einer Absorberkomponente und Ammoniak als Arbeitsmittelkomponente für Absorptionswärme- und Absorptionskältemaschinen, wobei die Konzentration des Lithiumbromids in Wasser bei −10°C 57 Gew.-%

$$\left(\frac{\text{Salz}}{\text{Salz}+H_2O}\right)\pm 10\%\ \text{ist.}$$

**Revendication**

1. Utilisation d'une solution aqueuse de bromure de lithium en tant que composé absorbeur pour un couple de produits de travail constitué d'un composé absorbeur et d'ammoniaque en tant que milieu de travail pour le fonctionnement de machines à réfrigération et à chaleur par absorption, laquelle solution aqueuse est caractérisée en ce que la concentration du bromure de lithium dans l'eau à −10°C est de 57%±10% en poids de

$$\frac{\text{SEL}}{\text{SEL}+H_2O}$$

**Claim**

1. The use of an aqueous lithium bromide solution as absorber component for a pair of working substances consisting of an absorber component and of ammonia as the working-medium component for absorption heating and refrigerating machines, the concentration of the lithium bromide in water at −10°C amounting to 57% by weight

$$\left(\frac{\text{salt}}{\text{salt}+H_2O}\right)\pm 10\%.$$

Absorber:  $\dfrac{3\,kg\,LiBr}{2\,kg\,H_2O}$

$X = \dfrac{kg\ NH_3}{kg\ NH_3 + kg\ Absorber}$

$NH_3\quad X = 1,00$

$X = 0,52$

$X = 0,43$

$X = 0,32$

$X = 0,19$

$X = 0,08$

$X = 0,00$

LiBr·6 NH₃ (fest)

Krist. Grenze  Na SCN – NH₃

0012 856